# EUROPEAN PATENT APPLICATION

(11) **EP 4 693 014 A1**
(43) Date of publication of application: **11.02.2026**
(21) Application number: 23932141.7
(22) Date of filing: 13.11.2023
(51) Int. Cl.: G06F 3/12, B65C 11/02

(54) **LABEL PRINTING SYSTEM, SERVER, AND METHOD FOR MANUFACTURING COMMODITY**

(30) Priority: 05.04.2023 JP 2023061610
(71) Applicant: SUNTORY HOLDINGS LIMITED, 5308203 Osaka City, Osaka (CN)
(72) Inventor: TAKAHASHI Daiki, Tokyo 108-8503 (JP); MURAI Moto, Tokyo 108-8503 (JP); KANO Yuho, Tokyo 108-8503 (JP); YAMAGUCHI Ryoo, Tokyo 108-8503 (JP)
(74) Representative: Vossius & Partner Patentanwälte Rechtsanwälte mbB
(86) International application number: PCT/JP2023/040710
(87) International publication number: WO 2024/209732

(57) **Abstract**

In order to solve the conventional problem that it is not possible to print, at stores, labels that contain the content selected by users and that are to be attached to products, a server 3 includes: a reception unit 32 that receives a first print instruction; a content acquisition unit 332 that acquires content corresponding to a content identifier contained in the first print instruction from a content management unit 313 in which pieces of content are stored in association with one or two or more content identifiers; and a the transmission unit 34 that transmits a second print instruction having the content acquired by the content acquisition unit 332 to a printing apparatus 4 corresponding to a store terminal 2. Accordingly, it is possible to print, at stores, labels that contain the content selected by users and that are to be attached to products.

## Description

### Technical field

The present invention relates to a label printing system for printing labels that are to be attached to products, and the like.

### Background Art

Conventionally, there have been techniques related to food and drink containers with labels and manufacturing methods of the same, which are designed to ensure high hygiene even when the contents such as beverages are consumed by directly placing the mouth on the containers (see Patent Document 1).

### Citation List

### Patent Document

Patent Document 1: JP 2023-22526A

### Summary of Invention

### Technical Problem

However, it has not been possible for conventional techniques to print, at stores, labels that contain the content selected by users and that are to be attached to products.

### Solution to Problem

A first aspect of the present invention is directed to a label printing system including one or two or more store terminals, a server, and one or two or more printing apparatuses, wherein each store terminal includes: a terminal storage unit in which a store identifier for identifying a store is stored; a terminal acceptance unit that accepts a content identifier for identifying content; and a terminal transmission unit that transmits a first print instruction having the content identifier and the store identifier to the server, the server includes: a reception unit that receives the first print instruction; a content acquisition unit that acquires content corresponding to the content identifier contained in the first print instruction from a content management unit in which pieces of content are stored in association with one or two or more content identifiers; and a transmission unit that transmits a second print instruction having the content acquired by the content acquisition unit to a printing apparatus corresponding to the store terminal, and the printing apparatus receives the second print instruction, and prints a label that has the content contained in the second print instruction and that is to be attached to a product.

With this configuration, it is possible to print, at a store, a label that contains the content selected by a user and that is to be attached to a product.

Furthermore, a second aspect of the present invention is directed to the label printing system according to the first aspect, further including one or two or more media, wherein information containing one or two or more content identifiers is printed on the media, and the terminal acceptance unit accepts the content identifiers corresponding to the media.

With this configuration, it is possible to print, at a store, a label that contains the content selected by a user and that is to be attached to a product.

Furthermore, a third aspect of the present invention is directed to the label printing system according to the first or second aspect, including two or more store terminals, the server, and two or more printing apparatuses, wherein the server further includes: a correspondence management unit that manages the printing apparatuses corresponding to the two or more store terminals; and a determination unit that determines a printing apparatus corresponding to a store terminal by referring to the correspondence management unit, and the transmission unit transmits the second print instruction to the printing apparatus determined by the determination unit.

With this configuration, it is possible to print, based on users' selection accepted at two or more stores, labels that contain the content selected by the users and that are to be attached to products, using printing apparatuses at the stores.

Furthermore, a fourth aspect of the present invention is directed to the label printing system according to any one of the first to third aspects, wherein the server further includes an environment information acquisition unit that acquires environment information corresponding to the store identifier contained in the first print instruction from an environment management unit in which pieces of environment information associated with two or more store identifiers are stored, and the transmission unit transmits a second print instruction having the content and the environment information.

With this configuration, it is possible to print a label containing environment information that is different for each store.

Furthermore, a fifth aspect of the present invention is directed to the label printing system according to the second aspect, wherein the medium are cards on which the content identifiers are printed.

With this configuration, it is possible to print, at a store, a label that contains the content selected by a user and that is to be attached to a product, using a card on which a content identifier is printed.

Furthermore, a sixth aspect of the present invention is directed to the label printing system according to the second aspect, wherein the medium are cards on which the pieces of content associated with the content identifiers are printed.

With this configuration, it is possible to print, at a store, a label that contains the content selected by a user and that is to be attached to a product, using a card on which the content is printed.

Furthermore, a seventh aspect of the present invention is directed to the label printing system according to any one of the first to sixth aspects, wherein two or more pieces of content are stored in association with at least one content identifier, in the content management unit, the content acquisition unit selects one piece of content from among the two or more pieces of content corresponding to the one content identifier contained in the first print instruction, and the transmission unit transmits a second print instruction having the one piece of content to the printing apparatus.

With this configuration, it is possible for a user to enjoy the variations of the content selected by the user.

Furthermore, an eighth aspect of the present invention is directed to the label printing system according to the seventh aspect, wherein the content acquisition unit selects the one piece of content at random from among the two or more pieces of content corresponding to the one content identifier contained in the first print instruction, or selects the one piece of content based on one or more pieces of environment information when the first print instruction was received.

With this configuration, it is possible for a user to enjoy the variations of the content selected by the user.

Furthermore, a ninth aspect of the present invention is directed to a card, which is the card according to the fifth or sixth aspect.

With this configuration, it is possible to print, at a store, a label that contains the content selected by a user and that is to be attached to a product.

Furthermore, a tenth aspect of the present invention is directed to a server including: a reception unit that receives a first print instruction having a content identifier and a store identifier; a content acquisition unit that acquires content corresponding to the content identifier contained in the first print instruction from a content management unit in which pieces of content are stored in association with one or more content identifiers; and a transmission unit that transmits a second print instruction having the content acquired by the content acquisition unit to a printing apparatus corresponding to a store terminal.

With this configuration, it is possible to assist in printing, at a store, a label that contains the content selected by a user and that is to be attached to a product.

Furthermore, an eleventh aspect of the present invention is directed to a product manufacturing method for completing a product that is to be sold at a store at which a store terminal is located, including: a terminal acceptance step in which the store terminal accepts a content identifier; a terminal transmission step in which the store terminal transmits a first print instruction having the content identifier and a stored store identifier to a server; an instruction reception step in which the server receives the first print instruction; a content acquisition step in which the server acquires content corresponding to the content identifier contained in the first print instruction from a content management unit in which pieces of content are stored in association with one or two or more content identifiers; a server transmission step in which the server transmits a second print instruction having the content to a printing apparatus corresponding to the store terminal; a step in which the printing apparatus receives the second print instruction; a step in which the printing apparatus prints a label that has the content contained in the second print instruction and that is to be attached to the product; and an attachment step in which the label is attached to a product container.

With this configuration, it is possible to print, at a store, a label that contains the content selected by a user and that is to be attached to a product, thereby completing the product to which the label is attached, at the store.

### Advantageous Effects of Invention

With the label printing system according to the present invention, it is possible to print, at stores, labels that contain the content selected by users and that are to be attached to products.

### Brief Description of Drawings

FIG. 1 is a conceptual diagram of a label printing system A in Embodiment 1.
FIG. 2 is a block diagram of the label printing system A in the embodiment.
FIG. 3 is a flowchart illustrating an operation example of a store terminal 2 in the embodiment.
FIG. 4 is a flowchart illustrating an operation example of a server 3 in the embodiment.
FIG. 5 is a diagram showing a correspondence table in the embodiment.
FIG. 6 is a diagram showing an environment information management table in the embodiment.
FIG. 7 is a diagram showing a content management table in the embodiment.
FIG. 8 is a diagram showing a card holder in the embodiment.
FIG. 9 is a diagram illustrating a specific example of the operation of the label printing system A in the embodiment.
FIG. 10 is a diagram illustrating a specific example of the operation of the label printing system A in the embodiment.

### Description of Embodiment

Hereinafter, an embodiment of a label printing system and the like will be described with reference to the drawings. It should be noted that constituent elements denoted by the same reference numerals in the embodiments perform similar operations, and thus a description thereof may not be repeated.

### Embodiment 1

In this embodiment, a label printing system will be described including a store terminal that accepts and transmits a content identifier, a server that receives the content identifier from the store terminal, and configures and transmits label information containing content corresponding to the content identifier, and a printing apparatus that receives the label information and prints a label that is to be attached to a product.

Furthermore, in this embodiment, a label printing system will be described that enables service expansion across multiple stores by causing a server to manage the correspondence between store terminals and printing apparatuses.

Furthermore, in this embodiment, a label printing system will be described that manages environment information for each store and prints a label further containing environment information corresponding to a store at which a user purchases a product.

Furthermore, in this embodiment, a label printing system will be described that includes a card on which one or more of a content identifier and content are printed.

Moreover, in this embodiment, a label printing system will be described in which a server selects one piece of content from among two or more pieces of content corresponding to a content identifier received by the server.

In this specification, the state in which information X is associated with information Y means that the information Y can be acquired from the information X or the information X can be acquired from the information Y, and there is no limitation on the method for associating the information. The information X and the information Y may be linked to each other or in the same buffer. The information X may be contained in the information Y, or the information Y may be contained in the information X, for example.

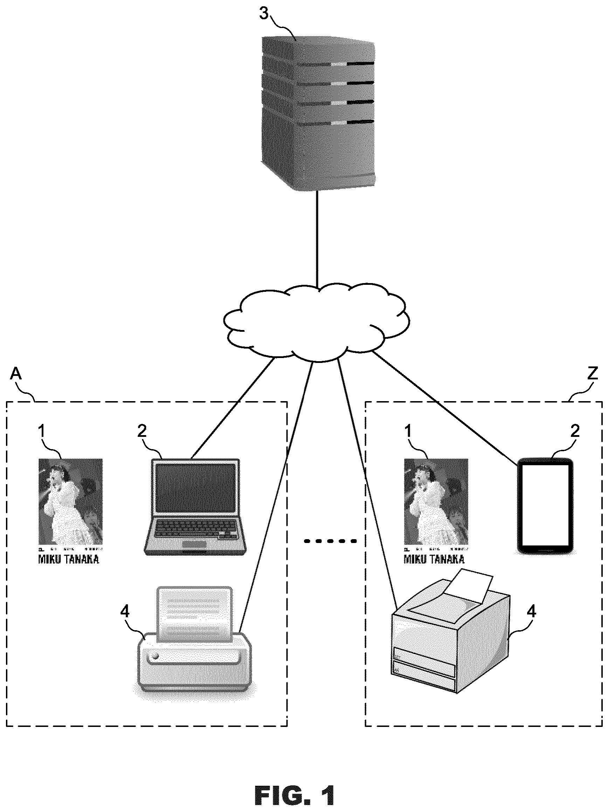

FIG. 1 is a conceptual diagram of a label printing system A in this embodiment. The label printing system A includes one or two or more media 1, one or two or more store terminals 2, a server 3, and one or two or more printing apparatuses 4. In FIG. 1, it is preferable that two or more stores in the label printing system A each include one or more store terminals 2 and one or more printing apparatuses 4. The stores are denoted by A, .., Z in FIG. 1.

For example, information containing one or two or more content identifiers is printed on each medium 1. For example, information containing one or two or more pieces of content is printed on the medium 1. It is preferable that a content identifier and content identified with the content identifier are printed on the medium 1.

The medium 1 is preferably an item that a user brings to the cash register when purchasing a product at a store. The product preferably has a product container. The product is, for example, a beverage, but it may be food or the like, and there is no limitation on the type thereof.

The store is a place where products are sold. The store may be, for example, a convenience store, but it may be a supermarket, a drugstore, or the like, and there is no limitation on the type thereof.

The medium 1 is, for example, a card on which a content identifier is printed. The medium 1 is, for example, a card on which content associated with the content identifier is printed.

The content identifier is information for identifying content. The content identifier is typically an ID, but it may be a content name or the like. The content identifier expressed on the medium 1 may be a graphical code in which the content identifier is embedded. The graphical code is, for example, a two-dimensional code, but it may be a barcode or the like, and there is no limitation on the type thereof. The two-dimensional code is, for example, a QR code (registered trademark) or a color code. It is also possible that the content identifier expressed on the medium 1 is a code and the content identifier transmitted from a store terminal 2 to the server 3 is an ID. That is to say, in the label printing system A, content identifiers for identifying the same content may be of two or more types.

The state of being printed is a state of being expressed. The printing may be performed using ink or the like, but other methods such as cutting are also acceptable. The material of the medium 1 is paper, resin, or the like, but there is no limitation on the type thereof. The medium 1 is preferably in the form of a card, but there is no limitation on the shape of the medium 1. The form of a card refers to a thin rectangular shape. The medium 1 is preferably sized such that it can be carried by a user, but there is no limitation on the size thereof. The medium 1 is preferably sized such that it can be placed on the palm of a hand.

The content is a pattern, an image, a text string, or the like printed on the label. There is no limitation on the data type, content, and the like of the content. The content is, for example, anime characters, photos of idols, landscapes, or the like.

The label is an object that is to be attached to a product. The label is preferably an object that is to be attached to a product container. The label is preferably a sticker. The label is more preferably a two-layer sticker whose upper layer can be peeled off. The label before printing the content is typically set in a printing apparatus 4. The label is preferably a blank medium, but it may have some printing on it. The label is preferably made of paper, but there is no limitation on the material thereof. It is preferable that later-described environment information and a product name are printed on the label as well as the content.

A store terminal 2 is a terminal located at a store. The store terminal 2 is typically a terminal that is operated by store staff, but it may be operated by a user. There is no limitation on the person who operates the store terminal 2. The store terminal 2 is, for example, a personal computer, a tablet device, or a smartphone, but there is no limitation on the type thereof.

The server 3 is an apparatus that receives a label print instruction, acquires content corresponding to the instruction, and transmits a print instruction containing the content to a printing apparatus 4. The server 3 is, for example, a cloud server or an ASP server, but there is no limitation on the type thereof.

The printing apparatus 4 is an apparatus that receives the instruction from the server 3 and prints a label that is to be attached to a product. The printing apparatus 4 is typically a so-called printer. There is no limitation on the type of printing apparatus 4. There is no limitation on the printing method used in the printing apparatus 4, and examples thereof include inkjet, laser, and other methods.

The label printed by the printing apparatus 4 is typically attached to the product by store staff. There is no limitation on the person who attaches the label to the product, and examples thereof also include a user. The attaching the label to the product is preferably attaching the label to a product container. The user is typically a person who purchases the product.

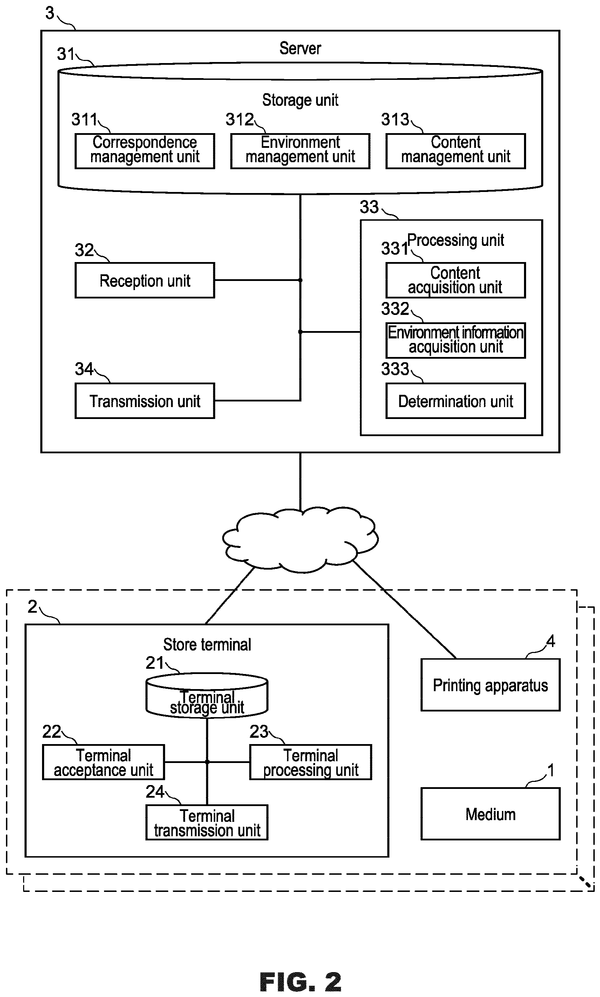

FIG. 2 is a block diagram of the label printing system A in this embodiment. In FIG. 2, the label printing system A includes the one or two or more media 1, the one or two or more store terminals 2, the server 3, and the one or two or more printing apparatuses 4. In FIG. 2, the label printing system A may not include the media 1. In such a case, for example, the user selects one piece of content from among multiple pieces of content on the screen of the store terminals 2.

Furthermore, if the label printing system A has two or more media 1, the user selects content by selecting one medium 1 from among the two or more media 1.

Each store terminal 2 includes a terminal storage unit 21, a terminal acceptance unit 22, a terminal processing unit 23, and a terminal transmission unit 24.

The server 3 includes a storage unit 31, a reception unit 32, a processing unit 33, and a transmission unit 34. The storage unit 31 includes a correspondence management unit 311, an environment management unit 312, and a content management unit 313. The processing unit 33 includes a content acquisition unit 332, an environment information acquisition unit 331, and a determination unit 333. The correspondence management unit 311, the environment management unit 312, and the content management unit 313 may be included in an unshown external apparatus.

Various types of information are stored in the terminal storage unit 21 constituting the store terminal 2. As the various types of information, for example, a store identifier is stored.

The store identifier is information for identifying a store at which a product is sold. The store identifier can be said to be information for identifying a store at which the store terminal 2 is located. The store identifier is, for example, a store ID or a store name. The store identifier may be information for identifying a store terminal 2. The store identifier may be a printing apparatus identifier for identifying a printing apparatus 4. In such a case, the store identifier is, for example, an IP address of the store terminal 2, an ID of the store terminal 2, an IP address of the printing apparatus 4, or an ID of the printing apparatus 4.

The terminal acceptance unit 22 accepts a content identifier. The terminal acceptance unit 22 may accept purchase information in addition to the content identifier. The purchase information is information on a product that is purchased. The purchase information contains, for example, the number of products and a product identifier. The product identifier is information for identifying a product. The product identifier is, for example, a product ID, a product name, or information for determining a product (e.g., the flavor of the product). For example, if a product that is sold at a store has multiple flavors (e.g., orange flavor, lemon flavor, etc.), the terminal acceptance unit 22 accepts a product identifier corresponding to one of the multiple flavors.

The terminal acceptance unit 22 accepts, for example, a content identifier corresponding to the medium 1. The content identifier corresponding to the medium 1 is typically a content identifier expressed on the medium 1 or a content identifier embedded in a code expressed on the medium 1. For example, the terminal acceptance unit 22 reads a content identifier that is a code expressed on the medium 1, thereby acquiring a content identifier that is an ID. Both a code embedded with an ID and the ID may be considered a content identifier.

In this example, the accepting is typically acceptance using a code reader, but it may be a concept that encompasses acceptance of information input from an input device such as a keyboard, a mouse, or a touch panel, reception of information transmitted via a wired or wireless communication line, and acceptance of information read from a recording medium such as an optical disk, a magnetic disk, or a semiconductor memory.

For example, the terminal acceptance unit 22 reads a code (e.g., a barcode) that is a content identifier printed on the medium 1, thereby acquiring a content identifier (e.g., a content ID) embedded in the code. For example, the terminal acceptance unit 22 accepts the number of products and a product identifier that are input by store staff.

The terminal processing unit 23 performs various types of processing. The various types of processing are, for example, processing for configuring a first print instruction using the content identifier accepted by the terminal acceptance unit 22.

The first printing instruction is an instruction to print a label. The first print instruction has a content identifier. The first print instruction typically has a store identifier. The first print instruction has, for example, the number of products, and the product identifier.

The terminal processing unit 23 acquires, for example, the store identifier in the terminal storage unit 21. Next, the terminal processing unit 23 configures, for example, a first print instruction having the store identifier and the content identifier accepted by the terminal acceptance unit 22.

The terminal processing unit 23 acquires, for example, the store identifier in the terminal storage unit 21. Next, the terminal processing unit 23 configures, for example, a first print instruction having the store identifier, the content identifier accepted by the terminal acceptance unit 22, the number of products, and the product identifier.

The terminal transmission unit 24 transmits the first print instruction having the content identifier and the store identifier to the server 3. The terminal transmission unit 24 typically transmits the first print instruction configured by the terminal processing unit 23 to the server 3.

Various types of information are stored in the storage unit 31 constituting the server 3. The various types of information are, for example, later-described one or two or more pieces of correspondence information, later-described environment information, or one or two or more pieces of content.

The correspondence management unit 311 manages the printing apparatuses 4 corresponding to the one or two or more store terminals 2. For example, one or two or more pieces of correspondence information are stored in the correspondence management unit 311. The correspondence information is information for mapping the store terminals 2 to the printing apparatuses 4. The correspondence information has, for example, a store identifier and a printing apparatus identifier. The correspondence information has, for example, a link to a store identifier and a link to a printing apparatus identifier.

The information having two or more pieces of correspondence information may be referred to as a correspondence table. The correspondence information is typically information for managing the store terminals 2 and the printing apparatuses 4 for the stores. The correspondence information is preferably information for managing one store terminal 2 and one printing apparatus 4, but it may be information for managing two or more store terminals 2 and one printing apparatus 4, information for managing one store terminal 2 and more printing apparatuses 4, or information for managing two or more store terminals 2 and two or more printing apparatuses 4.

One or two or more pieces of environment information are stored in the environment management unit 312 in association with one or two or more store identifiers.

The environment information is information on an environment in which products are sold. The environment information is, for example, location information for specifying the location of a store, or weather information of a region in which the store selling products is located. The environment information is information that is printed on a label. The environment information is, for example, a text string or an image, but there is no limitation on the data type thereof.

The environment information is, for example, specific environment information or common environment information. The specific environment information is information specific to a store. The specific environment information is preferably information that is different for each store, but it may be information that is common only to some stores such as two or more stores and that is different from the environment information of other stores. The common environment information is information that is common to two or more stores. The common environment information is, for example, time information. The time information is information for specifying the time when a product is sold or the current time. The time information is, for example, the date and time or the date and time including minutes. However, there is no limitation on the granularity of the time information.

Pieces of content are stored in the content management unit 313 in association with one or two or more content identifiers. The number of pieces of content associated with one content identifier is typically one, but it may be two or more.

The content is preferably an image, but it may be a text string or information containing an image and a text string. There is no limitation on the data type of content.

If the number of pieces of content associated with one content identifier is two or more, the two or more pieces of content are preferably related content. The related two or more pieces of content are, for example, different photos of the same idol, different images of the same character, images of different characters from the same anime, photos of different professional athletes from the same team, or the like.

Two or more pieces of content are preferably stored in association with at least one content identifier in the content management unit 313.

The reception unit 32 receives the first print instruction. The reception unit 32 typically receives the first print instruction transmitted from the store terminal 2. The reception unit 32 may receive the first print instruction from an unshown user terminal. The reception unit 32 may receive the first print instruction transmitted from the store terminal 2, via an unshown user terminal.

The user terminal is a terminal of a user who purchases a product. The user terminal is, for example, a smartphone, but it may be a tablet device, a personal computer, or the like.

The processing unit 33 performs various types of processing. The various types of processing are, for example, processing that is performed by the environment information acquisition unit 331, the content acquisition unit 332, or the determination unit 333.

The environment information acquisition unit 331 acquires one or two or more pieces of environment information. The environment information acquisition unit 331 acquires, for example, environment information corresponding to the store identifier contained in the received first print instruction, from the environment management unit 312. The environment information acquisition unit 331 acquires, for example, weather information of a region corresponding to the store identifier, from an unshown server. Such environment information is specific environment information.

The environment information acquisition unit 331 acquires, for example, time information from an unshown server. The time information is common environment information.

The content acquisition unit 332 acquires content corresponding to the content identifier contained in the received first print instruction, from the content management unit 313.

The content acquisition unit 332 selects, for example, one piece of content from among the two or more pieces of content corresponding to the one content identifier contained in the first print instruction.

The content acquisition unit 332 selects, for example, one piece of content at random from among the two or more pieces of content corresponding to the one content identifier contained in the first print instruction.

There is no limitation on the algorithm for selecting one piece of content at random. For example, the content acquisition unit 332 generates a random number, divides the random number by the number of pieces of content corresponding to one content identifier to obtain a remainder, and acquires content corresponding to the remainder.

The content acquisition unit 332 selects, for example, the one piece of content from among the two or more pieces of content corresponding to the one content identifier contained in the first print instruction, based on one or more pieces of environment information when the first print instruction was received. The one or more pieces of environment information are information acquired by the environment information acquisition unit 331. The content acquisition unit 332 selects the one piece of content from among the two or more pieces of content, for example, using the time information.

There is no limitation on the algorithm for selecting one piece of content based on one or more pieces of environment information. For example, the content acquisition unit 332 acquires the sum of one piece of environment information or two or more pieces of environment information, divides the acquired information by the number of pieces of content corresponding to one content identifier to obtain a remainder, and acquires content corresponding to the remainder. For example, the content acquisition unit 332 sequentially selects content such that the pieces of content corresponding to the one content identifier are equally selected.

Even if two or more pieces of content corresponding to one content identifier are present, the content acquisition unit 332 typically selects and acquires one piece of content, but it may acquire two or more pieces of content.

The content acquisition unit 332 configures, for example, a second print instruction containing the acquired one or two or more pieces of content. For example, the content acquisition unit 332 configures label information containing the acquired content and the acquired one or more pieces of environment information, and configures a second print instruction containing the label information.

The determination unit 333 determines a printing apparatus 4 corresponding to a store terminal 2 by referring to the correspondence management unit 311. The determination unit 333 acquires, for example, a printing apparatus identifier that is paired with the received store identifier, from the correspondence management unit 311.

The transmission unit 34 transmits a second print instruction having the content acquired by the content acquisition unit 332, to the printing apparatus 4 corresponding to the store terminal 2. The transmission unit 34 transmits, for example, the second print instruction to the printing apparatus 4 determined by the determination unit 333. The transmission unit 34 transmits, for example, the second print instruction configured by the content acquisition unit 332, to the printing apparatus 4 determined by the determination unit 333.

The transmission unit 34 preferably transmits a second print instruction having the content and the environment information.

The printing apparatus 4 receives the second print instruction from the server 3, and prints a label that has the content contained in the second print instruction and that is to be attached to a product.

For example, the printing apparatus 4 receives the second print instruction from the server 3, and prints a label that has the content contained in the second print instruction and one or more pieces of environment information and that is to be attached to a product.

The terminal storage unit 21, the storage unit 31, the correspondence management unit 311, the environment management unit 312, and the content management unit 313 are preferably non-volatile recording media, but they may also be realized by volatile recording media.

There is no limitation on the procedure in which information is stored in the terminal storage unit 21 and the like. For example, information may be stored in the terminal storage unit 21 and the like via a recording medium, information transmitted via a communication line or the like may be stored in the terminal storage unit 21 and the like, or information input via an input device may be stored in the terminal storage unit 21 and the like.

The terminal acceptance unit 22 may be realized by a device driver for an input part such as a code reader, a touch screen, or a keyboard, control software for a menu screen, or the like.

The terminal processing unit 23, the processing unit 33, the content acquisition unit 332, the environment information acquisition unit 331, and the determination unit 333 may be typically realized by processors, memories, or the like. Typically, the processing procedure of the terminal processing unit 23 and the like is realized by software, and the software is stored in a recording medium such as a ROM. However, the terminal processing unit 23 and the like may be realized by hardware (dedicated circuits). The processors are, for example, CPUs, MPUs, GPUs, or the like, but there is no limitation on the type thereof.

The terminal transmission unit 24 and the transmission unit 34 are typically realized by wireless or wired communication parts, but they may also be realized by broadcasting parts.

The reception unit 32 is typically realized by a wireless or wired communication part, but it may also be realized by a broadcast receiving part.

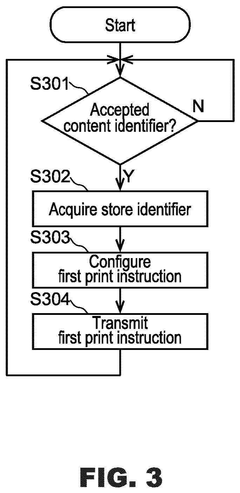

Next, an operation example of the label printing system A will be described. First, an operation example of the store terminal 2 will be described with reference to the flowchart in FIG. 3.

(Step S301) The terminal acceptance unit 22 determines whether or not it has accepted a content identifier. If it has accepted a content identifier, the procedure advances to step S302, or otherwise the procedure returns to step S301. In this example, the terminal acceptance unit 22 may accept the number of products, a product identifier, and the like as well.

(Step S302) The terminal processing unit 23 acquires a store identifier from the terminal storage unit 21.

(Step S303) The terminal processing unit 23 configures a first print instruction having the content identifier accepted in step S301 and the store identifier acquired in step S302. The first print instruction may have the number of products, the product identifier, and the like.

(Step S304) The terminal transmission unit 24 transmits the first print instruction configured in step S303, to the server 3. The procedure returns to step S301.

The server communication information (e.g., the IP address or URL of the server 3) for communicating with the server 3 is stored in the terminal storage unit 21.

In the flowchart in FIG. 3, the processing ends at power off or at an interruption of terminating processing.

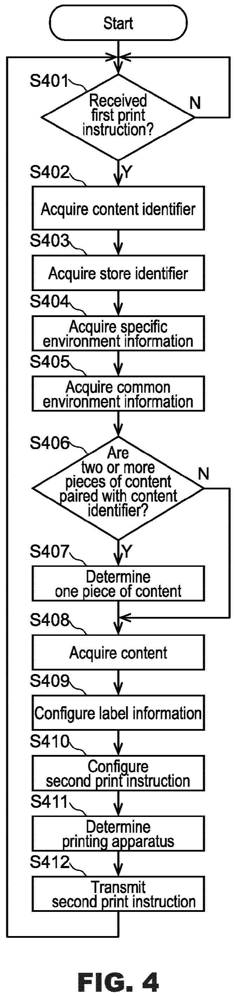

Next, an operation example of the server 3 will be described with reference to the flowchart in FIG. 4.

(Step S401) The reception unit 32 determines whether or not it has received a first print instruction from a store terminal 2. If it has received a first print instruction, the procedure advances to step S402, or otherwise the procedure returns to step S401.

(Step S402) The content acquisition unit 332 acquires a content identifier contained in the first print instruction received in step S401.

(Step S403) The environment information acquisition unit 331 acquires a store identifier contained in the first print instruction received in step S401.

(Step S404) The environment information acquisition unit 331 acquires one or more pieces of specific environment information that are paired with the store identifier acquired in step S403, from the environment management unit 312. In this example, there may be a case in which the specific environment information cannot be acquired.

(Step S405) The environment information acquisition unit 331 acquires one or more pieces of common environment information. The common environment information is, for example, time information. In this example, the environment information acquisition unit 331 may not acquire the common environment information.

(Step S406) The content acquisition unit 332 determines whether or not two or more pieces of content that are paired with the content identifier acquired in step S402 are present in the content management unit 313. If two or more pieces of such content are present, the procedure advances to step S407, or if only one piece of such content is present, the procedure advances to step S408.

(Step S407) The content acquisition unit 332 determines one piece of content that is to be acquired from among the two or more pieces of content that are paired with the content identifier acquired in step S402.

(Step S408) The content acquisition unit 332 acquires the only one piece of content that is paired with the content identifier acquired in step S402 or the one piece of content determined in step S407, from the content management unit 313.

(Step S409) The processing unit 33 configures label information having the content acquired in step S408 and one or more pieces of environment information. The one or more pieces of environment information are one or more of the one or more pieces of specific environment information and the one or more pieces of common environment information.

(Step S410) The processing unit 33 configures a second print instruction having the label information acquired in step S409. The second print instruction may have the number of products.

(Step S411) The determination unit 333 determines a printing apparatus 4 corresponding to the store identifier acquired in step S403. The determination unit 333 acquires, for example, a printing apparatus identifier that is paired with the store identifier acquired in step S403, from the correspondence management unit 311.

(Step S412) The transmission unit 34 transmits the second print instruction configured in step S410, to the printing apparatus 4 determined in step S411. The procedure returns to step S401.

In the flowchart in FIG. 4, the processing ends at power off or at an interruption of terminating processing.

The printing apparatus 4 receives the second print instruction from the server 3, and prints a label that is to be attached to a product, according to the second print instruction. If the second print instruction contains the number of products, the printing apparatus 4 prints the label for the specified number of products.

Hereinafter, a specific operation example of the label printing system A in this embodiment will be described.

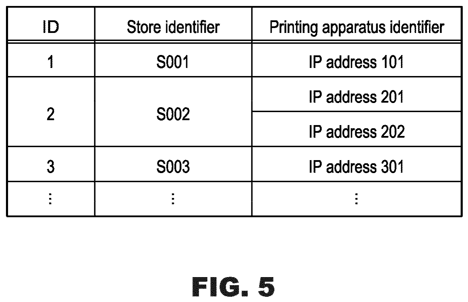

It is assumed that a correspondence table shown in FIG. 5 is stored in the correspondence management unit 311 of the server 3. The correspondence table is a table for mapping store terminals 2 to printing apparatuses 4. The correspondence table manages two or more records each having "ID", "store identifier", and "printing apparatus identifier". "ID" is information for identifying a record. "Store identifier" in this example is a store ID. "Printing apparatus identifier" in this example is an IP address of a printing apparatus 4.

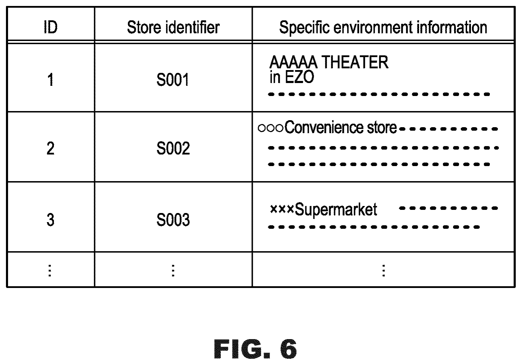

An environment information management table shown in FIG. 6 is stored in the environment management unit 312. The environment information management table is a table for managing specific environment information for each store. The specific environment information manages two or more records each having "ID", "store identifier", and "specific environment information". "Specific environment information" is information specific to each store, which is a string in this case, but it may be an image or the like, and there is no limitation on the data type thereof.

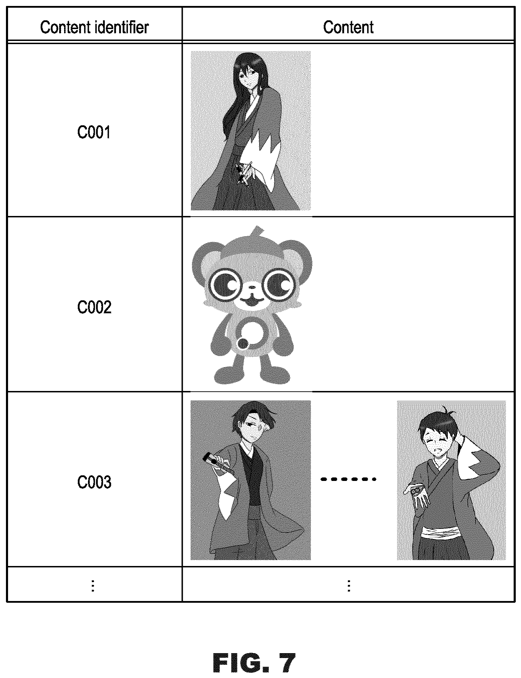

A content management table shown in FIG. 7 is stored in the content management unit 313. The content management table manages two or more records each having "content identifier" and "content". The records each contain one or two or more pieces of content. A multiple pieces of content correspond to the content identifier "C003".

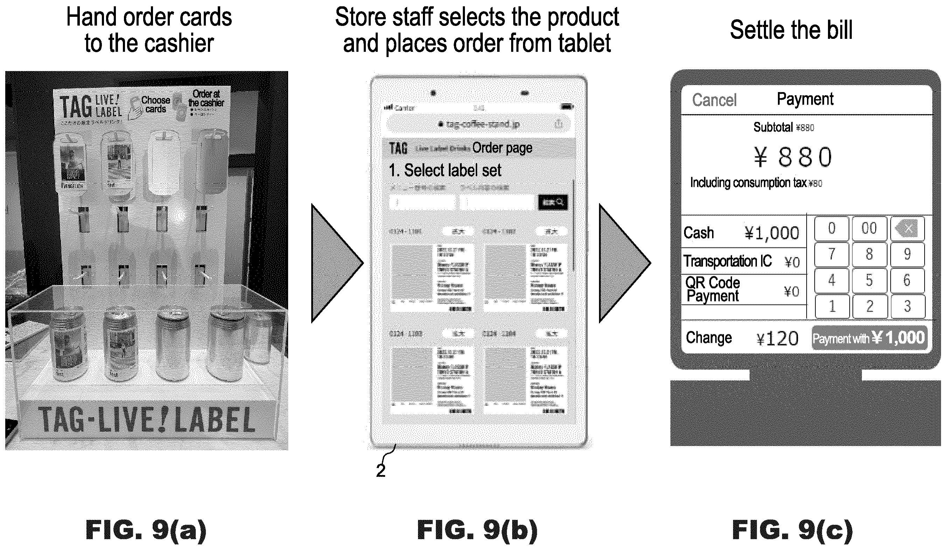

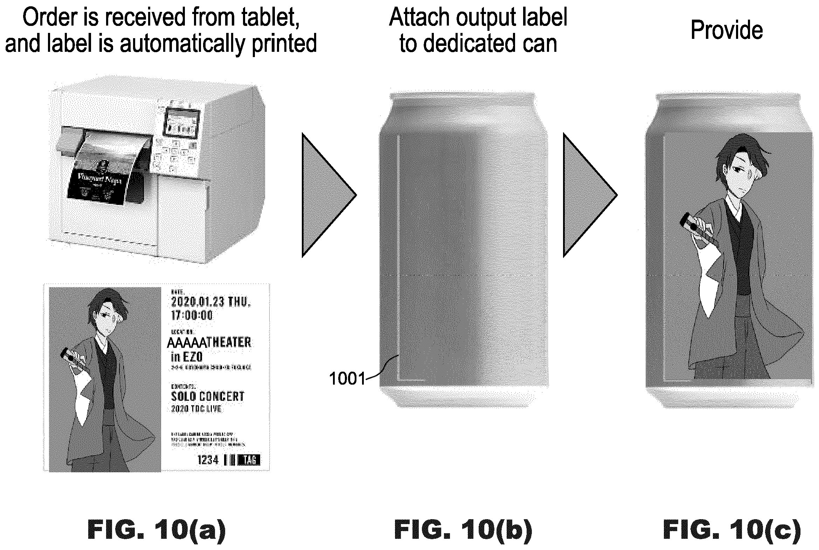

Hereinafter, a specific example of the operation of the label printing system A in which situation will be described with reference to FIGS. 9 and 10.

### Specific Example

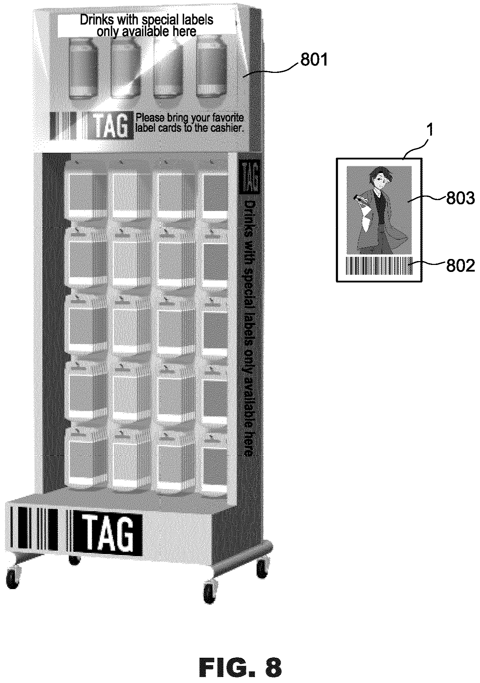

It is assumed that two or more stores each have a card corner equipped with a card holder 801 that holds multiple cards shown in 801 of FIG. 8. A large number of cards are arranged in the card holder 801. It is assumed that a user selects a card 1 from the card holder 801 and brings the card 1 to the cash register of the store (see FIG. 9(a)). It is assumed that the user informs store staff at the cash register of the quantity of products to purchase and the flavor (product identifier). In this example, a content identifier 802 and content 803 are printed on the card 1.

The card 1 is an example of the medium 1. The card 1 has a content identifier printed thereon. The content identifier in this case is, for example, a code (barcode) embedded with a content ID. The content ID is an example of a content identifier. The card 1 has all or part of the content identified with the content identifier. This is to make it easier for users to select cards.

Next, the store staff looks at the card 1 brought to the cash register by the user and designates the area of the content corresponding to the card 1 on the store terminal 2 (a tablet device in this example). The store staff inputs the quantity of products and flavor (product identifier) communicated by the user into the store terminal 2 (see FIG. 9(b)).

It is assumed that next, the terminal acceptance unit 22 of the store terminal 2 accepts the input "<Content Identifier> C003 <Quantity> 1 <Flavor> Orange" containing the content identifier and the like. Next, the terminal processing unit 23 of the store terminal 2 acquires the store identifier "S001" from the terminal storage unit 21. Next, the processing for configuring a first print instruction is performed using the input accepted by the terminal acceptance unit 22 and the store identifier. The first print instruction contains "<Store Identifier> S001 <Content Identifier> C003 <Quantity> 1 <Flavor> Orange". Next, the terminal transmission unit 24 transmits the first print instruction to the server 3.

Furthermore, the user makes payment at the cash register, and settlement is performed (see FIG. 9(c)).

Next, the reception unit 32 of the server 3 receives the first print instruction from the store terminal 2. Next, the content acquisition unit 332 acquires the content identifier "C003" contained in the received first print instruction.

Next, the environment information acquisition unit 331 acquires the store identifier "S001" contained in the received first print instruction. Next, the environment information acquisition unit 331 acquires one or more pieces of specific environment information "AAAA THEATER in EZO ..." that are paired with the store identifier "S001", from the environment management table (FIG. 6).

Next, the environment information acquisition unit 331 acquires one or more pieces of common environment information. In this example, the environment information acquisition unit 331 acquires the time information "date and time including minutes and seconds" from an unshown clock.

Next, the content acquisition unit 332 determines that multiple pieces of content that are paired with the acquired content identifier "C003" are present in the content management unit 313 by referring to the content management table (FIG. 7).

Next, the content acquisition unit 332 determines one piece of content that is to be acquired by random selection from among the two or more pieces of content that are paired with the content identifier "C003".

Next, the content acquisition unit 332 acquires the determined one piece of content from the content management table (FIG. 7).

Next, the processing unit 33 configures label information having the acquired content, one or more pieces of specific environment information, and one or more pieces of common environment information. Next, the processing unit 33 configures a second print instruction having the label information and the number of products "1".

Next, the determination unit 333 acquires the printing apparatus identifier "IP address 101" corresponding to the acquired store identifier "S001" from the correspondence table (FIG. 5).

Next, the transmission unit 34 transmits the configured second print instruction to the printing apparatus 4 determined using the printing apparatus identifier "IP address 101".

The processing unit 33 may accumulate all or part of the first print instruction "<Store Identifier> S001 <Content Identifier> C003 <Quantity> 1 <Flavor> Orange". The processing unit 33 may perform statistical processing on the accumulated two or more first print instructions, thereby acquiring statistical information. The statistical information is preferably transmitted to an external apparatus in response to the reception of an instruction.

The statistical information is preferably information on the content. The processing unit 33 acquires, for example, the number of content identifiers selected for each store and information indicating the relationship between the selected content and the product identifier ("Flavor" in this example). Such information indicating the relationship is, for example, the ratio of each piece of content to a product or the ratio of each product to a piece of content.

Next, the printing apparatus 4 receives the second print instruction. Next, the printing apparatus 4 prints a label containing the label information, using the label information contained in the second print instruction (see FIG. 10(a)).

Next, the store staff attaches the printed label to a container (a can in this example) of the product with the flavor specified by the user (see FIG. 10(b)). At that time, the store staff attaches the label along an L-shaped guide 1001 of the container. Accordingly, the product that is to be handed over to the user is completed (see FIG. 10(c)). Then, the store staff hands over the completed product to the user.

As described above, this embodiment makes it possible to print, at a store, a label that contains the content selected by a user and that is to be attached to a product.

Furthermore, this embodiment makes it possible to print, based on users' selection accepted at two or more stores, labels that contain the content selected by the users and that are to be attached to products, using the printing apparatus 4 at the stores.

Furthermore, this embodiment makes it possible to print a label containing environment information that is different for each store.

Furthermore, this embodiment makes it possible to print, at a store, a label that contains the content selected by a user and that is to be attached to a product, using a card on which a content identifier is printed.

Furthermore, this embodiment makes it possible to print, at a store, a label that contains the content selected by a user and that is to be attached to a product, using a card on which the content is printed.

Moreover, this embodiment makes it possible for a user to enjoy the variations of the content selected by the user.

The processing in this embodiment may be realized by software. The software may be distributed by software downloads or the like. Furthermore, the software may be distributed in a form where the software is stored in a recording medium such as a CD-ROM. The same applies to other embodiments in this specification. The software that realizes the server 3 in this embodiment is the following sort of program. Specifically, this program is a program for causing a computer capable of accessing a content management unit in which pieces of content are stored in association with one or more content identifiers, to function as: a reception unit that receives a first print instruction having a content identifier and a store identifier; a content acquisition unit that acquires content corresponding to the content identifier contained in the first print instruction from the content management unit; and a transmission unit that transmits a second print instruction having the content acquired by the content acquisition unit to a printing apparatus corresponding to the store terminal.

It should be noted that, in the program, in a step of transmitting information, a step of receiving information, or the like, processing that is performed by hardware, for example, processing performed by a modem or an interface card in the transmitting step (processing that can be performed only by hardware) is not included.

Furthermore, the computer that executes the program may be constituted by a single computer, or constituted by multiple computers. That is to say, centralized processing may be performed, or distributed processing may be performed.

Furthermore, in the foregoing embodiment, it will be appreciated that two or more communication parts in one apparatus may be physically realized by one medium.

Furthermore, in the foregoing embodiment, each process may be realized as centralized processing using a single apparatus, or may be realized as distributed processing using multiple apparatuses.

The present invention is not limited to the embodiments set forth herein. Various modifications are possible within the scope of the present invention.

### Industrial Applicability

As described above, the label printing system according to the present invention has an effect of making it possible to print, at stores, labels that contain the content selected by users and that are to be attached to products, thus rendering this system useful as a label printing system and the like.

## Claims

1. A label printing system comprising one or two or more store terminals, a server, and one or two or more printing apparatuses,
wherein each store terminal includes:
a terminal storage unit in which a store identifier is stored;
a terminal acceptance unit that accepts a content identifier; and
a terminal transmission unit that transmits a first print instruction having the content identifier and the store identifier to the server,
the server includes:
a reception unit that receives the first print instruction;
a content acquisition unit that acquires content corresponding to the content identifier contained in the first print instruction from a content management unit in which pieces of content are stored in association with one or two or more content identifiers; and
a transmission unit that transmits a second print instruction having the content acquired by the content acquisition unit to a printing apparatus corresponding to the store terminal, and
the printing apparatus receives the second print instruction, and prints a label that has the content contained in the second print instruction and that is to be attached to a product.

2. The label printing system according to claim 1, further comprising:
one or two or more media,
wherein information containing one or two or more content identifiers is printed on the media, and
the terminal acceptance unit accepts the content identifiers printed on the media.

3. The label printing system according to claim 1, comprising two or more store terminals, the server, and two or more printing apparatuses,
wherein the server further includes:
a correspondence management unit that manages the printing apparatuses corresponding to the two or more store terminals; and
a determination unit that determines a printing apparatus corresponding to a store terminal by referring to the correspondence management unit, and
the transmission unit transmits the second print instruction to the printing apparatus determined by the determination unit.

4. The label printing system according to claim 1,
wherein the server further includes an environment information acquisition unit that acquires environment information corresponding to the store identifier contained in the first print instruction from an environment management unit in which pieces of environment information associated with two or more store identifiers are stored, and
the transmission unit transmits a second print instruction having the content and the environment information.

5. The label printing system according to claim 2,
wherein the medium are cards on which the content identifiers are printed.

6. The label printing system according to claim 2,
wherein the medium are cards on which the pieces of content associated with the content identifiers are printed.

7. The label printing system according to claim 1,
wherein two or more pieces of content are stored in association with at least one content identifier, in the content management unit,
the content acquisition unit selects one piece of content from among the two or more pieces of content corresponding to the one content identifier contained in the first print instruction, and
the transmission unit transmits a second print instruction having the one piece of content to the printing apparatus.

8. The label printing system according to claim 7,
wherein the content acquisition unit selects the one piece of content at random from among the two or more pieces of content corresponding to the one content identifier contained in the first print instruction, or selects the one piece of content based on one or more pieces of environment information when the first print instruction was received.

9. A server comprising:
a reception unit that receives a first print instruction having a content identifier and a store identifier;
a content acquisition unit that acquires content corresponding to the content identifier contained in the first print instruction from a content management unit in which pieces of content are stored in association with one or more content identifiers; and
a transmission unit that transmits a second print instruction having the content acquired by the content acquisition unit to a printing apparatus corresponding to the store terminal.

10. A product manufacturing method for completing a product that is to be sold at a store at which a store terminal is located, comprising:
a terminal acceptance step in which the store terminal accepts a content identifier;
a terminal transmission step in which the store terminal transmits a first print instruction having the content identifier and a stored store identifier to a server;
an instruction reception step in which the server receives the first print instruction;
a content acquisition step in which the server acquires content corresponding to the content identifier contained in the first print instruction from a content management unit in which pieces of content are stored in association with one or two or more content identifiers;
a server transmission step in which the server transmits a second print instruction having the content to a printing apparatus corresponding to the store terminal;
a step in which the printing apparatus receives the second print instruction;
a step in which the printing apparatus prints a label that has the content contained in the second print instruction and that is to be attached to the product; and
an attachment step in which the label is attached to a product container.
